# EUROPÄISCHE PATENTANMELDUNG

(11) **EP 1 455 485 A1**
(43) Veröffentlichungstag der Anmeldung: **08.09.2004**
(21) Anmeldenummer: 03004675.9
(22) Anmeldetag: 03.03.2003
(51) Int. Cl.: H04L 12/28, H04B 7/26, H04L 12/56

(54) **Verfahren zur Übertragung von Informationen in einem heterogenen Netzwerk bestehend aus einem lokalen (WLAN) und einem zellularen Funkkommunikationssystem unter Kontrolle der Basisstation des zellularen Funkkommunikationssystems**

(71) Anmelder: SIEMENS AKTIENGESELLSCHAFT, 80333 München (DE)
(72) Erfinder: Li, Hui, Dr., 80937 München (DE); Schulz, Egon, Dr., 80993 München (DE); Yu, Dan, 81925 München (DE)

(57) **Zusammenfassung**

Die Erfindung betrifft ein Verfahren zur Übertragung von Informationen und ein Netzwerk umfassend mindestens ein lokales Funkkommunikationssystem (z.B. WLAN) und mindestens ein zellulares, hierarchisches Funkkommunikationssystem (z.B. UMTS) mit mindestens einer Basisstation (BS), wobei Informationen über eine Luftschnittstelle des lokalen Funkkommunikationssystems von einer ersten Funkstation (MN1) mit Mitteln zur Kommunikation zumindest mit dem lokalen Funkkommunikationssystem an eine zweite Funkstation (MN2) mit Mitteln zur Kommunikation zumindest mit dem lokalen Funkkommunikationssystem übertragen werden. Erfindungsgemäß werden von der ersten Funkstation (MN1) und/oder von der zweiten Funkstation (MN2) Mess- und/oder Zustandsinformationen zu Messungen der spezifischen Bedingungen der Funkstation und/oder zu Zuständen der Funkstation an die mindestens eine Basisstation (BS) und Signalisierungsinformationen bezüglich der Funkübertragung zwischen der ersten Funkstation (MN1) und der zweiten Funkstation (MN2) von der mindestens einen Basisstation (BS) an die erste Funkstation (MN1) und/oder an die zweite Funkstation (MN2) übermittelt.

## Beschreibung

Die Erfindung betrifft ein Verfahren zur Übertragung von Informationen in einem Netzwerk umfassend mindestens ein lokales Funkkommunikationssystem und mindestens ein zellulares, hierarchisches Funkkommunikationssystem mit mindestens einer Basisstation nach dem Oberbegriff des Anspruchs 1.

Die Erfindung betrifft ferner eine Basisstation in einem Netzwerk zur Übertragung von Informationen umfassend mindestens ein lokales Funkkommunikationssystem und mindestens ein zellulares, hierarchisches Funkkommunikationssystem mit mindestens der Basisstation nach dem Oberbegriff des Anspruchs 11 und ein zugehöriges Netzwerk.

In Funkkommunikationssystemen werden Informationen (beispielsweise Sprache, Bildinformation, Videoinformation, SMS (Short Message Service), MMS (Multimedia Messaging Service) oder andere Daten) mit Hilfe von elektromagnetischen Wellen über eine Funkschnittstelle zwischen sendender und empfangender Station (Basisstation bzw. Teilnehmerstation) übertragen. Das Abstrahlen der elektromagnetischen Wellen erfolgt dabei mit Trägerfrequenzen, die in dem für das jeweilige System vorgesehenen Frequenzband liegen.

Für das eingeführte GSM-Mobilfunksystem (Global System for Mobile Communication) werden Frequenzen bei 900, 1800 und 1900 MHz genutzt. Diese Systeme übermitteln im wesentlichen Sprache, Telefax und Kurzmitteilungen SMS (Short Message Service) und auch digitale Daten.

Für der zweiten Mobilfunkgeneration (2G) nachfolgende Mobilfunkkommunikationssysteme mit CDMA- oder TD/CDMA-Übertragungsverfahren, wie beispielsweise UMTS (Universal Mobile Telecommunication System) oder andere Systeme der dritten Generation, sind Frequenzen im Frequenzband von ca. 2000 MHz vorgesehen. Diese Systeme der dritten Generation werden entwickelt mit den Zielen eines großen Angebots an Diensten zur Datenübertragung und vor allem einer flexiblen Verwaltung der Kapazität der Funkschnittstelle, die bei Funkkommunikationssystemen die Schnittstelle mit den geringsten Ressourcen ist. Bei diesen Funkkommunikationssystemen soll es vor allem durch die flexible Verwaltung der Funkschnittstelle möglich sein, dass einer Teilnehmerstation bei Bedarf eine große Datenmenge mit hoher Datengeschwindigkeit senden und/oder empfangen kann.

Der Zugriff von Stationen auf die gemeinsamen Funkressourcen des Übertragungsmedium, wie zum Beispiel Zeit, Frequenz, Leistung oder Raum, wird bei diesen Funkkommunikationssystemen durch Vielfachzugriffsverfahren (Multiple Access, MA) geregelt.

Bei Zeitbereichs-Vielfachzugriffsverfahren (TDMA) wird jedes Sende- und Empfangsfrequenzband in Zeitschlitze unterteilt, wobei ein oder mehrere zyklisch wiederholte Zeitschlitze den Stationen zugeteilt werden. Durch TDMA wird die Funkressource Zeit stationsspezifisch separiert.

Bei Frequenzbereichs-Vielfachzugriffsverfahren (FDMA) wird der gesamte Frequenzbereich in schmalbandige Bereiche unterteilt, wobei ein oder mehrere schmalbandige Frequenzbänder den Stationen zugeteilt werden. Durch FDMA wird die Funkressource Frequenz stationsspezifisch separiert.

Bei Codebereichs-Vielfachzugriffsverfahren (CDMA) wird durch einen Spreizcode, der aus vielen einzelnen sogenannten Chips besteht, die zu übertragende Leistung/Information stationsspezifisch codiert, wodurch die zu übertragende Leistung codebedingt zufällig über einen großen Frequenzbereich gespreizt wird. Die von unterschiedlichen Stationen benutzten Spreizcodes innerhalb einer Zelle/Basisstation sind jeweils gegenseitig orthogonal oder im wesentlichen orthogonal, wodurch ein Empfänger die ihm zugedachte Signalleistung erkennt und andere Signale unterdrückt. Durch CDMA wird die Funkressource Leistung durch Spreizcodes stationsspezifisch separiert.

Bei orthogonalen Frequenz-Vielfachzugriffsverfahren (OFDM) werden die Daten breitbandig übermittelt, wobei das Frequenzband in äquidistante, orthogonale Unterträger eingeteilt wird, so dass die simultane Phasenverschiebung der Unterträger einen zwei-dimensionalen Datenfluss im Zeit-Frequenz Bereich aufspannt. Durch OFDM wird die Funkressource Frequenz mittels orthogonalen Unterträgern stationsspezifisch separiert. Die während einer Zeiteinheit auf den orthogonalen Unterträgern übermittelten zusammengefassten Datensymbole werden als OFDM Symbole bezeichnet.

Die Vielfachzugriffsverfahren können kombiniert werden. So benutzen viele Funkkommunikationssysteme eine Kombination der TDMA und FDMA Verfahren, wobei jedes schmalbandige Frequenzband in Zeitschlitze unterteilt ist.

Für das erwähnte UMTS-Mobilfunksystem wird zwischen einem sogenannten FDD-Modus (Frequency Division Duplex) und einem TDD-Modus (Time Division Duplex) unterschieden. Der TDD-Modus zeichnet sich insbesondere dadurch aus, dass ein gemeinsames Frequenzband sowohl für die Signalübertragung in Aufwärtsrichtung (UL - Uplink) als auch in Abwärtsrichtung (DL - Downlink) genutzt wird, während der FDD-Modus für die beiden Übertragungsrichtungen jeweils ein unterschiedliches Frequenzband nutzt.

In Funkkommunikationsverbindungen beispielsweise der zweiten und/oder dritten Generation können Informationen kanalvermittelt (CS Circuit Switched) oder paketvermittelt (PS Packet Switched) übertragen werden.

Die Verbindung zwischen den einzelnen Stationen erfolgt über eine Funkkommunikations-Schnittstelle (Luftschnittstelle). Basisstation und Funknetzwerkkontrolleinrichtung sind üblicherweise Bestandteile eines Basisstationssubsystems (RNS Radio Network Subsystem). Ein zellulares Funkkommunikationssystem umfasst in der Regel mehrere Basisstationssubsysteme, die an ein Kernnetz (CN Core Network) angeschlossen sind. Dabei ist die Funknetzwerkkontrolleinrichtung (RNC Radio Network Controller) des Basisstationssubsystems in der Regel bei paketvermittelten Datenübertragungen mit einer Zugangseinrichtung (SGSN Serving GPRS Support Node, mit GPRS General Packet Radio Service) des Kernnetzes verbunden. Diese Zugangseinrichtung des Kernnetzes erfüllt eine ähnliche Aufgabe wie die Knoten MSC (Mobile-services Switching Centre) und VLR (Visitor Location Register) für den kanalvermittelnden Teil des Kernnetzes. An die Zugangseinrichtung des Kernnetzes ist üblicherweise eine Übergangseinrichtung (GGSN Gateway GPRS Support Node) in andere Paketdatennetze wie beispielsweise das Internet angeschlossen.

Außer den beschriebenen gewöhnlich weiträumig organisierten (supralokalen) zellularen, hierarchischen Funknetzen gibt es auch drahtlose lokale Netze (WLANs Wireless Local Area Networks) mit einem in der Regel räumlich deutlich mehr begrenztem Funkabdeckungsbereich. Diese eignen sich beispielsweise hervorragend für einen hochbitratigen Internetzugang. WLANs übertragen Daten in einer ersten Version bei einer Frequenz um 2,4 GHz, in einer weiteren Version in einem Frequenzbereich bei etwa 5-6 GHz, wo quasi optische Ausbreitungsmerkmale herrschen.

Ohne Einschränkung der Erfindung wird im folgenden die Erfindung am Beispiel eines UMTS-Systems als zellularem, hierarchischem Funkkommunikationssystem und einem WLAN-System als lokalem Funkkommunikationssystem erläutert.

Mit WLAN kann ein drahtloses lokales Kommunikationsnetz aufgebaut werden, wobei die Teilnehmerstationen (MNs Mobile Nodes) per Funk über einen oder mehrere Sprünge (Hop, Multihop) oder über WLAN-Funkzugangseinrichtungen (APs Access Points) miteinander kommunizieren können, wobei über die WLAN-Funkzugangseinrichtungen (APs Access Points) z.B. eine Anbindung an Breitband-Datennetze (BDN Broadband Data Networks) erfolgen kann. Jede Funkzugangseinrichtung versorgt üblicherweise alle in ihrem Funkabdeckungsbereich befindlichen Teilnehmerstationen. Dabei ist die Zellengröße in der Regel auf bis zu einigen hundert Meter begrenzt. Prinzipiell kann mit WLAN ein zellulares Funknetz erstellt werden, in dem bei einer entsprechenden Bewegung der Teilnehmerstation eine bestehende Datenverbindung von Funkzugangseinrichtung zu Funkzugangseinrichtung übergeben werden kann (Roaming). Die maximalen Datenraten sind abhängig von der jeweiligen WLAN-Technologie und können bis zu 54 Mbit/s betragen.

Derzeit wird die Anbindung von WLANs an die räumlich in der Regel weit reichenden, zellularen Funkkommunikationssysteme beispielsweise der zweiten und/oder dritten Generation diskutiert, zum Beispiel in 3GPP-Standardisierungsgremien (3GPP Third Generation Partnership Project). Aufgrund der technischen Möglichkeiten von WLANs wie insbesondere der hohen Datenraten besteht ein großes Interesse, diese Technologie als Ergänzung zu supralokalen Funkkommunikationssystemen - beispielsweise als Ergänzung zu UMTS - in den sog. "Hot-Spots" zu nutzen, d.h. in lokal begrenzten Bereichen insbesondere mit großer Teilnehmerdichte wie z.B. Flughäfen, Hotels oder dergleichen. Hierbei können verschiedene WLAN-Technologien Verwendung finden, die einen breitbandigen Funkzugang zu den Breitband-Datennetzen ermöglichen und die beispielsweise auf TCP/IP (TCP Transmission Control Protocol / IP Internet Protocol), ATM (Asynchronous Transfer Mode) oder B-ISDN (Broadband Integrated Services Digital Network) basieren können. Beispiele für Breitband-WLAN-Technologien sind IEEE 802.11-Technologien (IEEE Institute of Electrical and Electronics Engineers) wie z.B. IEEE 802.11a, IEEE 802.11b oder Hiperlan/2 (High Performance Local Area Network Type 2), OpenAir oder SWAP (Shared Wireless Access Protocol). Im Rahmen der vorliegenden Erfindung wird die Bezeichnung "WLAN" stellvertretend für die einzelnen verschiedenen Breitband-WLAN-Technologien verwendet.

Für die Anbindung von WLANs an ein überörtliches bzw. überregionales hierarchisches Funknetz wie das UMTS besteht eine sehr attraktive Möglichkeit in einer Anbindung von WLAN und UMTS dadurch, dass die Funkzugangseinrichtungen des WLAN mit dem UMTS verbunden sind und/oder dass sog. Dual Mode Teilnehmerstationen genutzt werden, welche in der Lage sind, sowohl mit dem mindestens einen lokalen Funkkommunikationssystem - z.B. WLAN - als auch mit dem mindestens einen zellularen, hierarchischen Funkkommunikationssystem - z.B. UMTS - zu kommunizieren.

In einer UMTS-Teilnehmerstation kann beispielsweise die hardware-mäßige WLAN-Anbindung durch ein entsprechendes Modul in der Form bewerkstelligt werden, dass das Modul z.B. entweder als WLAN-Funkteil bereits mitintegriert ist oder als WLAN-PC-Karte in die Anschlüsse einer entsprechenden Schnittstelle der Teilnehmerstation bzw. des Terminals, beispielsweise einer PCMCIA-Schnittstelle, eingeschoben wird.

Damit steht ein Verfahren und ein zugehöriges Netzwerk umfassend mindestens ein lokales Funkkommunikationssystem und mindestens ein zellulares, hierarchisches Funkkommunikationssystem mit mindestens einer Basisstation zur Verfügung, wobei Informationen über eine Luftschnittstelle des lokalen Funkkommunikationssystems von einer ersten Funkstation mit Mitteln zur Kommunikation zumindest mit dem lokalen Funkkommunikationssystem an eine zweite Funkstation mit Mitteln zur Kommunikation zumindest mit dem lokalen Funkkommunikationssystem übertragen werden.

Aufgrund des bevorzugten Anwendungsszenarios von WLAN in den Hot-Spots wird angenommen, dass es zukünftig weltweit eine Vielzahl von öffentlichen wie auch von privaten WLAN-Providern geben wird, die ihre Netze mit gleichen oder aber auch mit jeweils verschiedenen WLAN-Technologien betreiben können.

Damit eine dafür geeignete Teilnehmerstation, welche grundsätzlich in der Lage ist, sowohl mit einem zellularen, hierarchischen Funkkommunikationssystem als auch mit einem lokalen Funkkommunikationssystem zu kommunizieren und welche sich aktuell in einer Funkzelle des zellularen, hierarchischen Funkkommunikationssystems befindet, auch in einer Informationsübertragung unter Nutzung des mindestens eines lokalen Funkkommunikationssystems eingebunden werden kann, sind geeignete Maßnahmen zu ergreifen, die dies ermöglichen bzw. erleichtern sollen.

Der Erfindung liegt daher die Aufgabe zugrunde, ein Verfahren und eine Basisstation, sowie ein Netzwerk der eingangs genannten Art aufzuzeigen, welche derartige Maßnahmen auf einfache Art und Weise ermöglichen bzw. bereitstellen, ohne dass eine starke Anbindung oder Kopplung zwischen dem bzw. den lokalen Funkkommunikationssystem(en) und dem zellularen, hierarchischen Funkkommunikationssystem erforderlich sein muss. Die vorhandene Infrastruktur sollte dabei gegebenenfalls - soweit dies möglich und/oder sinnvoll ist - ausgenutzt werden.

Die Aufgabe wird für das Verfahren mit den Merkmalen des Anspruchs 1, für die Basisstation mit den Merkmalen des Anspruchs 11 und für das Netzwerk mit den Merkmalen des Anspruchs 14 gelöst.

Vorteilhafte Ausgestaltung und Weiterbildungen sind Gegenstand der abhängigen Ansprüche.

Erfindungsgemäß werden von der ersten Funkstation und/oder von der zweiten Funkstation Mess- und/oder Zustandsinformationen zu Messungen der spezifischen Bedingungen der Funkstation und/oder zu Zuständen der Funkstation an die mindestens eine Basisstation übermittelt und es werden Signalisierungsinformationen bezüglich der Funkübertragung zwischen der ersten Funkstation und der zweiten Funkstation von der mindestens einen Basisstation an die erste Funkstation und/oder an die zweite Funkstation übermittelt.

Damit ist es möglich, unter Nutzung der vorhandenen Struktur des zellularen, hierarchischen Funkkommunikationsnetzes eine Erweiterung des Netzwerks durch ein oder mehrere lokale Funkkommunikationssysteme vorzunehmen, wobei es gelingt, durch die Steuerung über die mindestens eine Basisstation des zellularen, hierarchischen Funkkommunikationsnetzes die Performance des Netzwerkes insgesamt zu erhöhen.

Die Funkzelle, die der mindestens einen Basisstation zugeordnet ist, kann in Sektoren aufgeteilt sein.

Die Funkstationen bzw. Teilnehmerstationen können - müssen aber nicht - mobil sein. Eine Funkstation kann auch eine Relaisstation des lokalen Funkkommunikationssystems sein. Durch Relaisstationen kann die Reichweite eines lokalen Funkkommunikationsnetzes vergrößert werden. Als Relaisstationen können Teilnehmerstationen, aber auch in der Regel ortsfeste Stationen eines Netzbetreibers oder eines Diensteanbieters dienen. Eine Funkstation stellt auch Funkzugangseinrichtungen des lokalen Funkkommunikationssystems dar.

In Weiterbildung der Erfindung können die Mess- und/oder Zustandsinformationen der Funkstation Informationen bezüglich der Nachbarstationen, der Verkehrslast im Bereich der Funkstation, der Stromversorgung der Funkstation und/oder der von der Funkstation unterstützten Übertragungsmodi umfassen. Alle für eine Netzwerkkontrolle möglicherweise relevanten Umstände, Eigenschaften oder Zustände können erfasst und von der mindestens einen Basisstation berücksichtigt werden.

In Ausgestaltung der Erfindung können die Messungen der spezifischen Bedingungen der Funkstation und/oder die Zustandsermittlung der Funkstation periodisch und/oder auf Anforderung durchgeführt werden. Die periodische Durchführung ermöglicht eine verringerte Signalisierungskommunikation gegenüber der Durchführung auf eine Anforderung hin. Die Anforderung kann von unterschiedlichen Stellen des Netzwerkes kommen, beispielsweise von der Basisstation.

Die Signalisierungsinformationen bezüglich der Funkübertragung zwischen der ersten Funkstation und der zweiten Funkstation können Daten zur Sendeleistung, zur Funkfrequenz, zum Übertragungsmodus und/oder dergleichen umfassen. Durch die Übermittlung der Signalisierungsinformationen übt die mindestens eine Basisstation eine aktive Kontrolle und Steuerung im Netzwerk aus. Die Signalisierungsinformationen können daher grundsätzlich alle dafür wichtigen Daten enthalten.

Weiterhin kann im erfindungsgemäßen Verfahren vorgesehen sein, dass die Signalisierungsinformationen bezüglich der Funkübertragung zwischen der ersten Funkstation und der zweiten Funkstation auf Anforderung durch die mindestens eine Basisstation, durch eine Funkzugangseinrichtung des lokalen Funkkommunikationssystems und/oder durch die erste Funkstation und/oder durch die zweite Funkstation übermittelt werden.

Im Falle, dass Nutzinformation von der ersten Funkstation über mindestens eine dritte Funkstation mit Mitteln zur Kommunikation zumindest mit dem lokalen Funkkommunikationssystem an die zweite Funkstation übertragen werden, können vorteilhafterweise Pfadinformationen bezüglich eines Übertragungspfades zwischen der erste Funkstation und der zweiten Funkstation von der mindestens einen Basisstation an die erste Funkstation übermittelt werden. Dies erleichert das Routing im lokalen Funkkommunikationssystem. In einem aus mehreren Funkstationen bestehenden Funkkommunikationssystem muss für ein Datenpaket ein Pfad von dem Sender gegebenen-falls über mehrere das Datenpaket weiterleitende Funkstationen zu dem Empfänger gefunden werden. Die Auswahl des Weges bezeichnet man als Routing. Handelt es sich bei den Funkstationen um mobile Funkstationen, so ändert sich in der Regel die Topologie des Netzwerkes mit der Zeit. Ein geeignetes Routing Verfahren muss diesen ständigen Veränderungen Rechnung tragen.

Dabei kann die Übermittlung der Pfadinformationen bezüglich des Übertragungspfades eine Übertragung über das zellulare, hierarchische Funkkommunikationssystem einschließen. Das bedeutet, dass Informationen zum Routing zumindest auch über eine Funkschnittstelle des zellularen, hierarchischen Funkkommunikationssystems übertragen werden. Dies kann sich sowohl auf die Durchführung der Übermittlung der Pfadinformation an sich, d.h. die Informationsübertragung, als auch auf den Übertragungsweg der Nutzinformationen über den Pfad (Route) beziehen.

Die mindestens eine Basisstation kann die Signalisierungsdaten als Broadcast, auf einem geteilten Funkkanal oder auf einem dedizierten Funkkanal senden.

In Ausgestaltung der Erfindung schließt die Übermittlung der Signalisierungsinformationen an die erste Funkstation und/oder an die zweite Funkstation eine Übertragung über eine Funkzugangseinrichtung des lokalen Funkkommunikationssystems ein. Damit wird die Infrastruktur des lokalen Funkkommunikationssystems gewinnbringend genutzt.

Nach einer Ausbildung der Erfindung ist vorgesehen, dass die mindestens eine Basisstation eine Nachbarschaftstabelle über zumindest einen Teilbereich des lokalen Funkkommunikationssystems mit Daten zu Nachbarstationen mit Mitteln zur Kommunikation zumindest mit dem lokalen Funkkommunikationssystem vorhält. Dann kann die mindestens eine Basisstation bei Bedarf schnell die gewünschten Pfadinformationen zur Verfügung stellen.

Die Erfindung betrifft auch eine Basisstation in einem Netzwerk zur Übertragung von Informationen umfassend mindestens ein lokales Funkkommunikationssystem und mindestens ein zellulares, hierarchisches Funkkommunikationssystem mit mindestens der Basisstation, wobei Informationen über eine Luftschnittstelle des lokalen Funkkommunikationssystems von einer ersten Funkstation, welche mit Mitteln zur Kommunikation zumindest mit dem lokalen Funkkommunikationssystem ausgestattet ist, an eine zweite Funkstation, welche ebenfalls Mittel zur Kommunikation zumindest mit dem lokalen Funkkommunikationssystem aufweist, übertragen werden. Diese Basisstation zeichnet sich dadurch aus, dass Mittel vorhanden sind, von der ersten Funkstation und/oder von der zweiten Funkstation Mess- und/oder Zustandsinformationen zu Messungen der spezifischen Bedingungen der Funkstation und/oder zu Zuständen der Funkstation an mindestens die eine Basisstation zu empfangen und Signalisierungsinformationen bezüglich der Funkübertragung zwischen der ersten Funkstation und der zweiten Funkstation von mindestens der einen Basisstation an die erste Funkstation und/oder an die zweite Funkstation zu übermitteln.

In der Basisstation können Mittel zum zumindest zeitweise Vorhalten einer Nachbarschaftstabelle über zumindest einen Teilbereich des lokalen Funkkommunikationssystems mit Daten zu Nachbarstationen mit Mitteln zur Kommunikation zumindest mit dem lokalen Funkkommunikationssystem vorgesehen sein.

In der Basisstation können die Mittel zum Anfordern der Messungen der spezifischen Bedingungen der Funkstation und/oder der Zustandsermittlung der Funkstation und/oder zum Anfordern der Signalisierungsinformationen bezüglich der Funkübertragung zwischen der ersten Funkstation und der zweiten Funkstation vorhanden sein.

Das erfindungsgemäße Netzwerk zur Übertragung von Daten mit mindestens zwei Funkkommunikationssystemen zeichnet sich dadurch aus, dass es zumindest eine Basisstation nach der Erfindung umfasst.

Die erfindungsgemäße Basisstation und das erfindungsgemäße Netzwerk eignen sich insbesondere zur Durchführung des erfindungsgemäßen Verfahrens. Im übrigen können sowohl in erfindungsgemäße Basisstation als auch im erfindungsgemäßen Netzwerk entsprechende Mittel vorgesehen sein, um die Verfahrensschritte ausführen zu können.

Nachfolgend soll die Erfindung bzw. Einzelheiten und Details der Erfindung anhand von in einer Figur dargestellten Ausführungsbeispielen näher erläutert werden.

Hierbei zeigt
- die Figur:: ein vereinfachtes Schema für eine Netzarchitektur eines Netzwerks mit einem lokalen Funkkommunikationssystem und einem zellulares, hierarchischen Funkkommunikationssystem.

In der Figur ist ein vereinfachtes Schema für eine mögliche Netzarchitektur als Beispiel illustriert. Das Netzwerk umfasst ein lokales Funkkommunikationssystem - z.B. WLAN - mit einer Funkzugangseinrichtung AP und ein zellulares, hierarchischen Funkkommunikationssystem - z.B. UMTS - mit einer Basisstation BS, deren Funkabdeckungsbereich (Funkzelle) in der Figur durch ein Sechseck angedeutet ist. Die Basisstation BS ist an Backbone-Netz Bb1 angebunden, die Funkzugangseinrichtung AP an ein Backbone-Netz Bb2. Die Backbone-Netze Bb1 und Bb2 sind miteinander verbunden. Es kann ferner - wie in der Figur gezeigt - eine Luftschnittstelle zwischen der Basisstation und der Funkzugangseinrichtung AP bestehen. Damit kann der Informationsaustausch zwischen der mindestens einen Basisstation BS und einer Funkzugangseinrichtung AP gegebenenfalls erleichtert werden. Diese Verbindung über die Luft ist nicht grundsätzlich erforderlich, da ja eine Verbindung über die Backbone-Netze Bb1 und Bb2 besteht.

In der Funkzelle des zellularen, hierarchischen Funkkommunikationssystems (z.B. UMTS) befinden sich räumlich die Teilnehmerstationen MN1, MN2, MN3, MN4 und MN5. Im Beispiel sind zwei Typen von Teilnehmerstationen vorhanden: Einerseits Multi Mode Geräte des Typs 1 mit der Fähigkeit mit beiden Funkkommunikationssystemen, dem lokalen und dem zellularen hierarchischen System, kommunizieren zu können, und andererseits Funkstationen des Typs 2, die ausschließlich mit dem lokalen Funkkommunikationssystem kommunizieren können. In die zweite Kategorie des Typs 2 fallen auch Multi Mode Funkstationen, welche trotz grundsätzlicher Eignung aktuell keine Kommunikation im zellularen, hierarchischen Funkkommunikationssystem durchführen wollen, sollen oder können (beispielsweise wegen zu geringen oder ungünstigen verfügbaren Ressourcen).

Selbstverständlich können in der Funkzelle auch Funkstationen vorhanden sein (nicht dargestellt), welche nur eine Schnittstelle zum zellularen, hierarchischen Funkkommunikationssystem unterstützen, aber eine Schnittstelle zum lokalen Funkkommunikationssystem dagegen nicht.

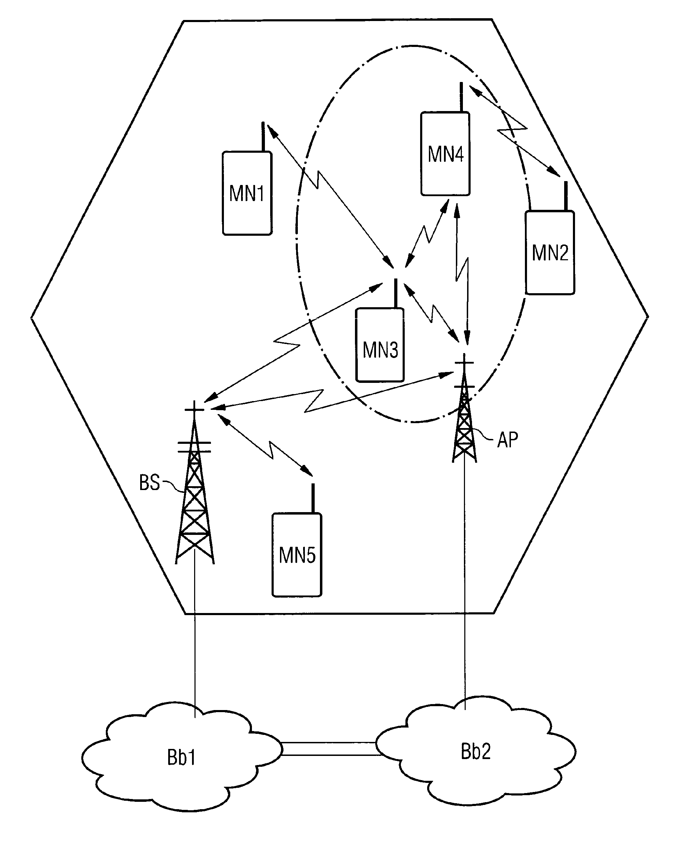

Zur ersten Kategorie der Multi Mode Funkstationen des Typs 1 zählen in Figur 1 die Stationen MN3 und MN5, während zur zweiten Kategorie des Typs 2 die Funkstationen MN1, MN2 und MN4 zählen.

Jede Funkstation MN1, MN2, MN3, MN4 und MN5 liefert nun vorzugsweise periodisch Mess- und/oder Zustandsinformationen zu Messungen der spezifischen Bedingungen der Funkstationen und/oder zu Zuständen der Funkstationen an die Basisstation BS. Für die Funkstationen MN3, MN4 und MN5 kann die Übermittlung direkt über die Luftschnittstelle des zellularen, hierarchischen UMTS Funkkommunikationssystems erfolgen, während die Funkstationen MN1, MN2 und MN4 eine Übermittlung mindestens über die Funkzugangseinrichtung AP des WLAN oder über eine der Funkstationen mit UMTS Interface wie MN3 durchführen müssen. Insgesamt gibt es daher drei Arten der Übermittlung der Mess- und/oder Zustandsinformationen an die Basisstation BS:
i) Die Mess- und/oder Zustandsinformationen liefernde Funkstation ist eine Funkstation des Typs 1, beispielsweise Funkstation MN3 oder MN5. Die Mess- und/oder Zustandsinformationen können direkt an die Basisstation BS über die UMTS Schnittstelle übertragen werden.
ii) Die Mess- und/oder Zustandsinformationen liefernde Funkstation ist eine Funkstation des Typs 2, beispielsweise Funkstation MN1. Funkstation MN1 versucht die Mess- und/oder Zustandsinformationen über eine Multi Hop Pfad an die Funkzugangseinrichtung AP des WLAN zu übermitteln. Da die weiterreichende Funkstation MN3 eine Typ 1 Funkstation mit Unterstützung der UMTS Schnittstelle ist, können die Informationen von der Funkstation MN3 direkt an die Basisstation BS über die UMTS Luftschnittstelle übertragen werden.
iii) Funkstation MN2 eine Funkstation des Typs 2. Auch Funkstation MN2 überträgt die Mess- und/oder Zustandsinformationen über einen Multi Hop Pfad. Die weiterleitende Funkstation MN4 ist ebenfalls eine Funkstation des Typs 2 und überträgt die Mess- und/oder Zustandsinformationen von Funkstation MN2 an die Funkzugangseinrichtung AP des WLAN, von wo die Mess- und/oder Zustandsinformationen über die Bachkbone-Netze Bb2 und Bb1 an die an die Basisstation BS gesendet werden.

Auch die Funkzugangseinrichtung AP des WLAN kann als Funkstation Mess- und/oder Zustandsinformationen zu Messungen der spezifischen Bedingungen der Funkzugangseinrichtung AP an die Basisstation BS senden.

Die Basisstation BS kann die übermittelten Informationen auswerten und entsprechende Signalisierungsinformationen an eine oder mehrere Funkstationen übermitteln.

Beispielsweise kann die Basisstation BS auf der Grundlage der empfangenen Messinformationen die Lastverteilung im Netzwerk ermitteln. Wenn sich eine Verkehrsüberlastung zeigt, wird die Basisstation diese lokalisieren und anhand der Messinformationen gegebenenfalls z.B. geeignete Sendeleistungen für Funkstationen vorschlagen und an die Funkzugangseinrichtung AP übertragen, damit die Funkzugangseinrichtung AP diese den von der Verkehrsüberlastung betroffenen Funkstationen mitteilt. Auf diese Weise kann die Basisstation BS mit heterogenen Funkstationen das Netzwerk kontrollieren.

Für die Übertragung der Signalisierungsinformationen von der Basisstation stehen mehrere Möglichkeiten offen: Die Basisstation kann die Signalisierungsinformationen über die Funkzugangseinrichtung AP an die Funkstationen des WLAN übermitteln. Dies ist insbesondere geeignet, wenn die Initiative von der Basisstation BS ausgeht. Die Basisstation BS kann die Signalisierungsinformationen über einen Pfad des lokalen Funkkommunikationssystems an die Funkstation übermitteln. Dies ist insbesondere dann sinnvoll, wenn eine Anforderung von einer Funkstation erfolgt ist.

Jede Funkstation des Typs 1 kann eine Anfrage zu bestimmten Informationen an die Basisstation senden. Will beispielsweise die Funkstation MN1 in der Figur Nutzinformationen an die Funkstation MN2 übertragen, benötigt Funkstation MN1 den Pfad zur Funkstation MN2. Durch Signalmessung hat MN1 seinen Nachbarn MN3 erkannt. Dieses Ergebnis wird an die Basisstation BS übermittelt. Ebenso übermitteln die Funkstationen MN2, MN3 und MN4 ihre Nachbarkenntnisse an die Basisstation. Dies sind für die Funkstation MN2 die Funkstation MN3, für die Funkstation MN3 sind dies die Funkstationen MN1, MN4 und die Funkzugangseinrichtung AP; für die Funkstation MN4 sind dies diee Funkstationen MN2 und MN3. Die Basisstation kann diese Informationen in einer Nachbarschaftstabelle zusammenstellen.

Mit Vorteil werden die Nachbarschaftsinformationen über den Funknetzteil des WLAN in der Basisstation BS zumindest zeitweise vorgehalten. In Abhängigkeit von bestimmbaren Bedingungen können Kriterien gewählt werden, wann welche Informationen über das WLAN nicht mehr gespeichert bleiben bzw. werden müssen.

Um für die geplante Übertragung von Nutzinformationen an die Funkstation MN2 einen Pfad zu erfahren, sendet Funkstation MN1 im Broadcast eine Anfrage nach einem Pfad (Route Request). Funkstation MN3 erhält diese Routen-Anfrage von Funkstation MN1 zu Funkstation MN2 und leitet sie an die Basisstation BS weiter. Die Basisstation BS sucht in der Nachbarschaftstabelle nach den gewünschten Pfaden.
Die Basisstation BS signalisiert diese Pfadinformation (im erwähnten Beispiel: MN1 zu MN3 zu MN4 zu MN2) an Funkstation MN3. Funkstation MN3 leitet die Pfadinformation an Funkstation MN1 weiter. Unter Nutzung des mitgeteilten Pfades kann Funkstation MN1 nun mit Funkstation MN2 im WLAN kommunizieren.

## Patentansprüche

1. Verfahren zur Übertragung von Informationen in einem Netzwerk umfassend mindestens ein lokales Funkkommunikationssystem und mindestens ein zellulares, hierarchisches Funkkommunikationssystem mit mindestens einer Basisstation (BS),
wobei Informationen über eine Luftschnittstelle des lokalen Funkkommunikationssystems von einer ersten Funkstation (MN1) mit Mitteln zur Kommunikation zumindest mit dem lokalen Funkkommunikationssystem an eine zweite Funkstation (MN2) mit Mitteln zur Kommunikation zumindest mit dem lokalen Funkkommunikationssystem übertragen werden,
**dadurch gekennzeichnet,**
**dass** von der ersten Funkstation (MN1) und/oder von der zweiten Funkstation (MN2) Mess- und/oder Zustandsinformationen zu Messungen der spezifischen Bedingungen der Funkstation und/oder zu Zuständen der Funkstation an die mindestens eine Basisstation (BS) übermittelt werden und
**dass** Signalisierungsinformationen bezüglich der Funkübertragung zwischen der ersten Funkstation (MN1) und der zweiten Funkstation (MN2) von der mindestens einen Basisstation (BS) an die erste Funkstation (MN1) und/oder an die zweite Funkstation (MN2) übermittelt werden.

2. Verfahren nach Anspruch 1,
**dadurch gekennzeichnet,**
**dass** die Mess- und/oder Zustandsinformationen der Funkstation (MN1, MN2) Informationen bezüglich der Nachbarstationen, der Verkehrslast im Bereich der Funkstation, der Stromversorgung der Funkstation und/oder der von der Funkstation unterstützten Übertragungsmodi umfassen.

3. Verfahren nach Anspruch 1 oder 2,
**dadurch gekennzeichnet,**
**dass** die Messungen der spezifischen Bedingungen der Funkstation (MN1, MN2) und/oder die Zustandsermittlung der Funkstation periodisch und/oder auf Anforderung durchgeführt werden.

4. Verfahren nach einem der Ansprüche 1 bis 3,
**dadurch gekennzeichnet,**
**dass** die Signalisierungsinformationen bezüglich der Funkübertragung zwischen der ersten Funkstation (MN1) und der zweiten Funkstation (MN2) Daten zur Sendeleistung, zur Funkfrequenz, zum Übertragungsmodus und/oder dergleichen umfassen.

5. Verfahren nach einem der Ansprüche 1 bis 4,
**dadurch gekennzeichnet,**
**dass** die Signalisierungsinformationen bezüglich der Funkübertragung zwischen der ersten Funkstation (MN1) und der zweiten Funkstation (MN2) auf Anforderung durch die mindestens eine Basisstation (BS), durch eine Funkzugangseinrichtung (AP) des lokalen Funkkommunikationssystems und/oder durch die erste Funkstation (MN1) und/oder durch die zweite Funkstation (MN2) übermittelt werden.

6. Verfahren nach einem der Ansprüche 1 bis 5,
**dadurch gekennzeichnet,**
**dass** Nutzinformation von der ersten Funkstation (MN1) über mindestens eine dritte Funkstation (MN3, MN4) mit Mitteln zur Kommunikation zumindest mit dem lokalen Funkkommunikationssystem an die zweite Funkstation (MN2) übertragen werden und
**dass** Pfadinformationen bezüglich eines Übertragungspfades zwischen der erste Funkstation (MN1) und der zweiten Funkstation (MN2) von der mindestens einen Basisstation (BS) an die erste Funkstation (MN1) übermittelt werden.

7. Verfahren nach Anspruch 6,
**dadurch gekennzeichnet,**
**dass** die Übermittlung der Pfadinformationen bezüglich des Übertragungspfades eine Übertragung über das zellulare, hierarchische Funkkommunikationssystem einschließt.

8. Verfahren nach einem der Ansprüche 1 bis 7,
**dadurch gekennzeichnet,**
**dass** die mindestens eine Basisstation (BS) die Signalisierungsdaten als Broadcast, auf einem geteilten Funkkanal oder auf einem dedizierten Funkkanal sendet.

9. Verfahren nach einem der Ansprüche 1 bis 8,
**dadurch gekennzeichnet,**
**dass** die Übermittlung der Signalisierungsinformationen an die erste Funkstation (MN1) und/oder an die zweite Funkstation (MN2) eine Übertragung über eine Funkzugangseinrichtung (AP) des lokalen Funkkommunikationssystems einschließt.

10. Verfahren nach einem der Ansprüche 1 bis 9,
**dadurch gekennzeichnet,**
**dass** die mindestens eine Basisstation (BS) eine Nachbarschaftstabelle über zumindest einen Teilbereich des lokalen Funkkommunikationssystems mit Daten zu Nachbarstationen mit Mitteln zur Kommunikation zumindest mit dem lokalen Funkkommunikationssystem vorhält.

11. Basisstation (BS) in einem Netzwerk zur Übertragung von Informationen umfassend mindestens ein lokales Funkkommunikationssystem und mindestens ein zellulares, hierarchisches Funkkommunikationssystem mit mindestens der Basisstation (BS),
wobei Informationen über eine Luftschnittstelle des lokalen Funkkommunikationssystems von einer ersten Funkstation (MN1) mit Mitteln zur Kommunikation zumindest mit dem lokalen Funkkommunikationssystem an eine zweite Funkstation (MN2) mit Mitteln zur Kommunikation zumindest mit dem lokalen Funkkommunikationssystem übertragen werden,
**dadurch gekennzeichnet,**
**dass** Mittel vorhanden sind, von der ersten Funkstation (MN1) und/oder von der zweiten Funkstation (MN2) Mess- und/oder Zustandsinformationen zu Messungen der spezifischen Bedingungen der Funkstation und/oder zu Zuständen der Funkstation an mindestens die eine Basisstation (BS) zu empfangen und Signalisierungsinformationen bezüglich der Funkübertragung zwischen der ersten Funkstation (MN1) und der zweiten Funkstation (MN2) von mindestens der einen Basisstation (BS) an die erste Funkstation (MN1) und/oder an die zweite Funkstation (MN2) zu übermitteln.

12. Basisstation (BS) nach Anspruch 11,
**dadurch gekennzeichnet,**
**dass** Mittel zum zumindest zeitweise Vorhalten einer Nachbarschaftstabelle über zumindest einen Teilbereich des lokalen Funkkommunikationssystems mit Daten zu Nachbarstationen mit Mitteln zur Kommunikation zumindest mit dem lokalen Funkkommunikationssystem vorgesehen sind.

13. Basisstation (BS) nach Anspruch 11 oder 12,
**dadurch gekennzeichnet,**
**dass** die Mittel zum Anfordern der Messungen der spezifischen Bedingungen der Funkstation (MN1, MN2) und/oder der Zustandsermittlung der Funkstation und/oder zum Anfordern der Signalisierungsinformationen bezüglich der Funkübertragung zwischen der ersten Funkstation (MN1) und der zweiten Funkstation (MN2) vorhanden sind.

14. Netzwerk zur Übertragung von Informationen umfassend mindestens ein lokales Funkkommunikationssystem und mindestens ein zellulares, hierarchisches Funkkommunikationssystem mit mindestens einer Basisstation (BS) nach Anspruch 11, 12 oder 13.
